# EUROPEAN PATENT APPLICATION

(11) **EP 0 940 906 A2**
(43) Date of publication of application: **08.09.1999**
(21) Application number: 99400498.4
(22) Date of filing: 02.03.1999
(51) Int. Cl.: H02K 5/14, H02K 5/10, H02K 5/15, H02K 5/00

(54) **Housing structure of electric motor**

(30) Priority: 03.03.1998 JP 06778198
(71) Applicant: Mitsuba Corporation, Kiryu-shi, Gunma (JP)
(72) Inventor: Uehara, Shuji, Maebashi-shi, Gunma (JP); Ito, Katsutoshi, Nitta-gun, Gunma (JP); Takebe, Yasuhiro, Ohta-shi, Gunma (JP); Hiruma, Hiroshi, Kiryu-shi, Gunma (JP)
(74) Representative: Hud, Robert

(57) **Abstract**

A recession 4c is provided in an end bracket 4, a proximal end portion 10a of a brush holder 10 is spigot-engaged with the recession 4c, a brush holder engaging portion 10e is spigot-engaged with the inner peripheral surface of a yoke 3, and a sealing member 13 is installed in a space formed between a bulging portion 10h of the brush holder proximal end portion 10a and an inner peripheral surface 9b of the recession 4c opposed thereto so as to seal and secure the end bracket 4 and the yoke 3.

The housing structure for electric motor permits easier assembly and higher sealing performance in installing a brush holder in an electric motor housing sealed with a yoke and an end bracket.

## Description

The present invention relates to a technical field of a structure of a housing of an electric motor constituting electrical equipment mounted on a vehicle or the like.

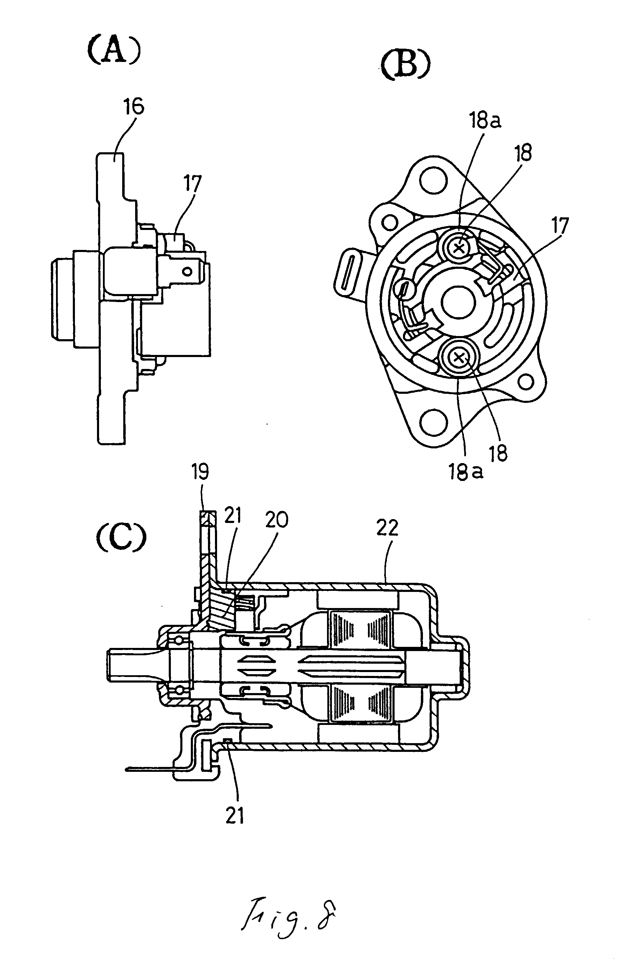

In general, as this type of electric motor, there is one in which the housing is constructed by a yoke holding a rotor equipped with a commutator, and an end bracket covering an open end of the yoke. In such an electric motor, a brush in slidable contact with the commutator is placed in a brush holder secured and supported in the housing. In this case, a structure has been proposed in which the brush holder is fixed to the end bracket beforehand, and the end bracket is installed to the yoke via a sealing member so as to support it in the housing in a hermetic manner. Hitherto, there has been known, as a method for securing the brush holder to the end bracket, a securing means in which a brush holder 17 is secured to an end bracket 16 by screws 18 as shown in Figs. 8 (A) and (B), or in which a resinous brush holder 20 is resin-molded integrally with a metallic end bracket 19 as shown in Fig. 8 (C).

Of the foregoing conventional methods, the former method inevitably requires more assembly steps which result in a complicated assembly process since it uses the screws 18 for fastening. In addition, the screws 18 for securing may loosen due to the vibration of the brush when the electric motor is run. To avoid this problem, considerations such as securing with the screws via elastic special washers 18a must be given. This poses a problem such as increased cost in addition to an increased number of components.

In the latter method, the molding work involves the constituents that have significantly different coefficients of expansion; hence, it is necessary to apply a sealant to the boundary portion of the metallic material and the resin material before the molding step so as to secure sealing performance. This has adversely affected the efficiency of work, presenting a problem of lower productivity. These have been the problems to be solved by the present invention.

Furthermore, in order to mount the end bracket, to which the brush holder has been secured, on the yoke in a hermetic manner, a sealant is installed between these components. In this case, a sealant 21 is attached from the outer diameter side beforehand to one of the components, namely, to the outer peripheral surface of a brush holder 20 secured to an end bracket 19 in this case as shown in Fig. 8 (C), then other component, namely, a yoke 22, is externally fitted axially onto the brush holder 20. Thus, two steps of work are necessary, also contributing to lower work efficiency. This has been another problem to be solved by the present invention.

In view of the above, the present invention has been made to solve the problems. According to the present invention, there is provided a structure of an electric motor housing wherein: the housing of the electric motor comprises a cylindrical yoke, in which an armature provided with a commutator is placed, and an end bracket for covering an open end of the yoke, a flange formed at the open end of the yoke being abutted against an inner surface of the end bracket; a recession in which a proximal end portion of a brush holder is internally fitted is formed in the inner surface of the end bracket to provide the brush holder for supporting a brush, which slidably contacts with the commutator, at the opening of the yoke; the brush holder is provided with an engaging portion projecting from the proximal end portion thereof to fit in the inner peripheral surface of the yoke, and the outer periphery of the proximal end thereof is provided with a bulging portion that bulges in a larger diameter than an inner diameter of the yoke but in a smaller diameter than an inner diameter of the recession of the end bracket; a space is formed that is surrounded by the bulging portion, an inner peripheral surface and a bottom outer diameter side surface of the recession, and the flange; and a sealing member is elastically incorporated in the space.

With this arrangement, the brush holder can be secured without using a special securing means, and the sealing member can be installed in the end bracket in the same direction as the yoke is installed.

In this structure, the bulging portion of the brush holder in accordance with the present invention may be formed on a slope.

Further in this structure, the recession in the end bracket in accordance with the present invention may be composed of a deep first recession portion in which the proximal end portion of the brush holder is internally fitted and a shallow second recession portion which has a larger diameter than the first recession portion and which has an internal peripheral surface opposed to the outer peripheral surface of the bulging portion.

Embodiments of the present invention will now be described with reference to the accompanying drawings in which :

Fig. 1 is a partly cut-away sectional view showing an electric motor.

Figs. 2 (A) and (B) are a left side view and a right side view, respectively, of the electric motor shown in Fig. 1.

Figs. 3 (A), (B), and (C) are a front view, a sectional view at the line A-A of Fig. 3 (A), and a rear view, respectively, of an end bracket.

Figs. 4 (A), (B), and (C) are a front view, a sectional view at the line A-A of Fig. 4 (A), and a rear view, respectively, of a brush holder.

Fig. 5 is an exaggerated sectional view of an essential section.

Figs. 6 (A) and (B) are a partly cut-away sectional view of an electric motor of a second embodiment and an internal view of an end bracket in which a brush holder has been installed, respectively.

Figs. 7 (A), (B), and (C) are a front view, a sectional view at the line A-A of Fig. 7 (A), and a rear view, respectively, of a brush holder of the second embodiment.

Figs. 8 (A), (B), and (C) are a side view, a front view, and a sectional view, respectively, of an essential section showing a conventional example.

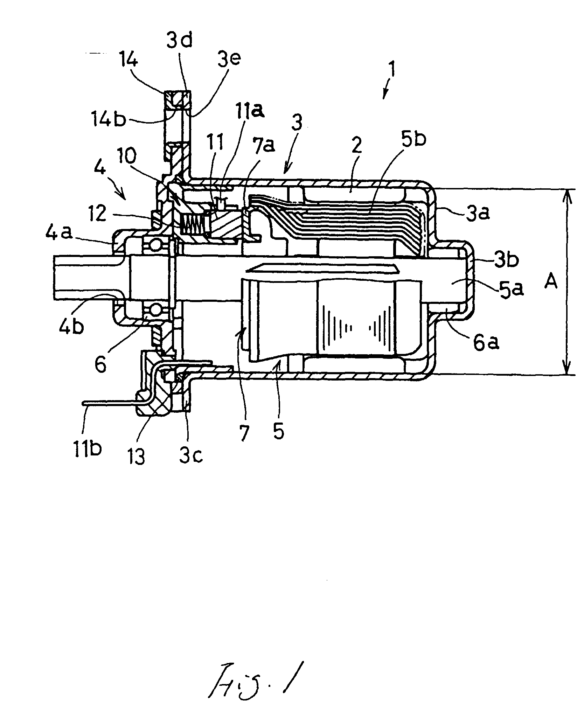

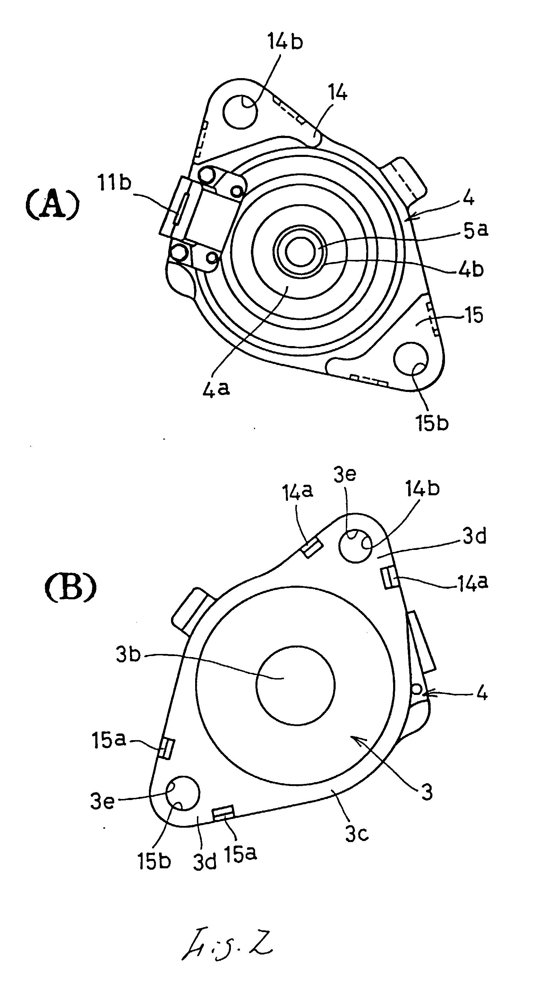

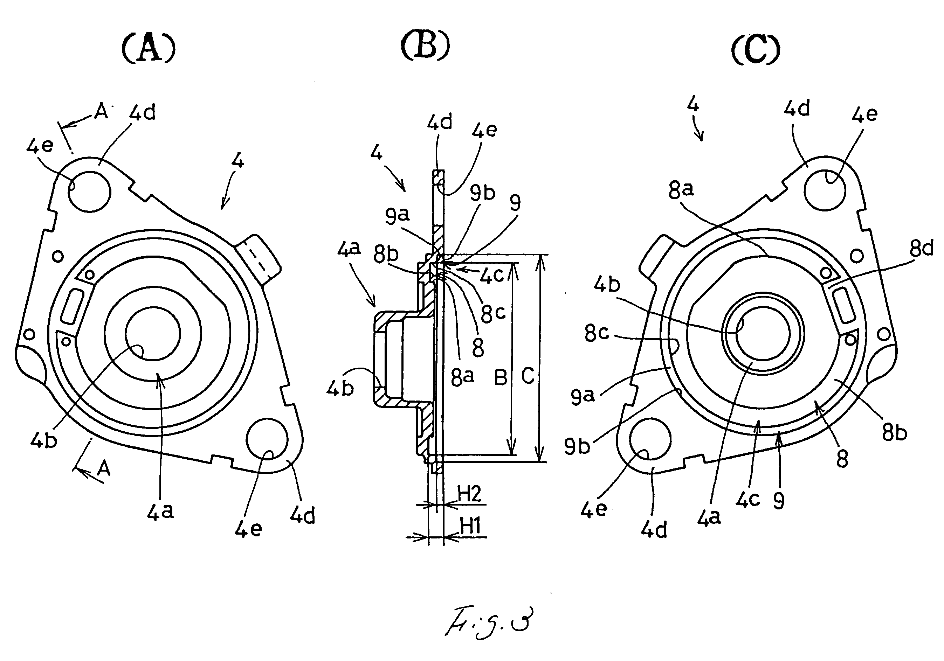

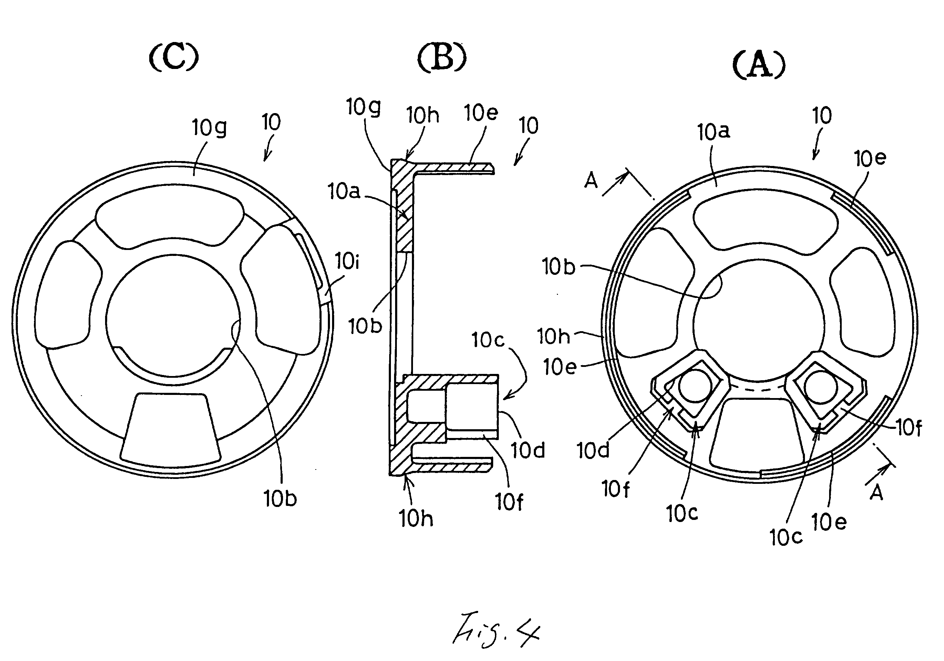

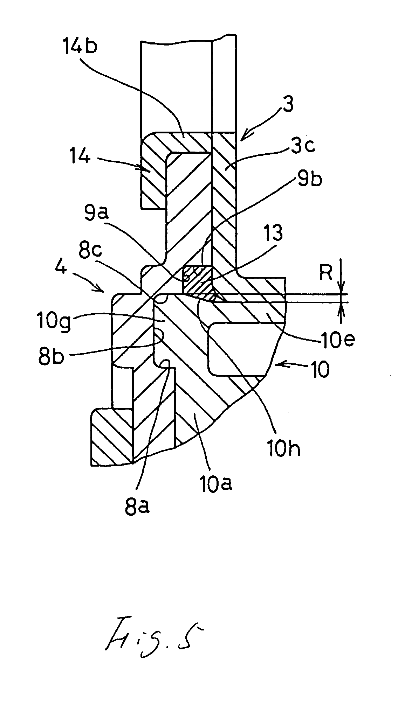

An embodiment of the present invention will now be described in conjunction with Fig. 1 through Fig. 5.

In the drawings, reference numeral 1 denotes a housing of an electric motor constituting electrical equipment. The housing 1 is comprised of a yoke 3 which has a permanent magnet 2 secured to its internal peripheral surface and which is formed to be a bottomed cylinder, and an end bracket 4 which covers an open end of the yoke 3. An armature shaft 5a constituting an armature 5 is rotatably supported in the housing 1 via bearings 6 and 6a. In the armature 5, the armature coil 5b is wound around the armature shaft (output shaft) 5a, and a commutator 7 is integrally provided on one end surface (an end surface at one side) of an armature coil 5b at the end bracket 4 side. In other words, the commutator 7 in this embodiment is formed to be a plane commutator disposed in a plane shape on an end surface of the armature coil 5b. A plurality of commutator segments 7a are radially arranged in relation to the armature shaft 5a and the sliding-contact surfaces thereof are oriented toward one side.

The yoke 3 is formed to be a bottomed cylinder having an inside diameter A, and a bearing 3b projecting toward the other side is formed on a bottom surface 3a. The other end of the armature shaft 5a is supported in the bearing 3b via the bearing 6a. Integrally formed on the opening end of the yoke 3 is a flange 3c which is bent to diverge toward the outside diameter thereof. A pair of protuberances 3d are integrally formed on the outside diameter side of the flange 3c. These protuberances 3d are formed to bear a positional relationship such that they are not point-symmetrical and they are respectively provided with through holes 3e for the installation to a body.

The end bracket 4 is made by press-forming a metal plate, and a bearing section 4a jutting out toward one side is formed at the center thereof by drawing, the bearing 6 being internally installed therein. The projection end surface of the bearing section 4a is provided with a through hole 4b. One end of the armature shaft (output shaft) 5a is supported by the bearing section 4a in such a manner that it juts out of the through hole 4b. Further, an annular recession 4c that is stepped in depth is provided by hammering in the inner surface (the other surface) of the end bracket 4. The recession 4c is composed of a first recession 8 and a second recession 9. The first recession 8 has a depth H1 and it is constituted by an inner peripheral surface 8a, a bottom surface 8b, and an outer peripheral surface 8c. The second recession 9 is formed to have a smaller depth H2 than that of the first recession 8 (H1 > H2) and it is constituted by a bottom surface 9a, which continues to the outer peripheral surface 8c of the first recession, and an outer peripheral surface 9b. An outside diameter B (the diameter which is set by the outer peripheral surface 8c of the first recession and which corresponds to the inside diameter of the second recession 9) of the first recession 8 is set to be smaller than an outside diameter C (the diameter set by the outer peripheral surface 9b of the second recession) of the second recession 9 (B < C). Further, the outside diameter B of the first recession 8 is set to be larger than the inside diameter A of the yoke 3 (A<B) so that a dimensional difference R is set between the outside diameter B of the first recession and the inside diameter A of the yoke.

A pair of protuberances 4d opposed to the yoke protuberances 3d are integrally formed at the outside diameter side of the second recession 9 in the end bracket 4, through holes 4e for mounting the body being provided in the protuberances 4d. Further, as it will be discussed later, aligning the protuberances 4d and 3d allows the yoke 3 and the end bracket 4 to be positioned circumferentially.

Reference numeral 10 indicates a brush holder that has been molded into one piece using a resin material, and the brush holder 10 is installed to cover the opening of the yoke 3. A through hole 10b in which the armature shaft 5a is inserted is provided at the center of a discoid proximal end portion 10a. A pair of brush housings 10c, in which a brush 11 is contained in such a manner that it can move in the axial direction, is formed such that they jut out and adjoin each other in the circumferential direction on a surface opposed to the yoke bottom surface 3a (the other side surface) in the brush holder proximal end portion 10a. These brush housings 10c are provided with openings 10d at the projecting end surface, and the other end of the brush 11 urged by an urging device 12 juts out of the openings 10d.

Further, engaging portions 10e, whose dimensions have been set to internally and which slidably fit in the yoke 3 having the inside diameter A, are formed so that they project from the outer periphery of the other side surface of the brush holder 10. The engaging portions 10e are formed with circumferential spaces provided therebetween and their axial projecting lengths are set to be approximately equal to or slightly shorter than the axial projecting lengths of the brush housings 10c. The engaging portions 10e located adjacently opposed to the brush housings 10c are formed in the direction in which pig tails 11a are drawn out (in the circumferential direction) so as to prevent (insulate) the pigtails 11a drawn out of the brush 11 from touching the metallic yoke 3.

Reference numeral 10f indicates guide grooves for drawing out the pigtails 11a that are formed in the outside diameter side portions of the respective brush housings 10c.

Formed on the surface (one surface), which is opposed to the end bracket 4, of the brush holder proximal end portion 10a is an annular protuberance 10g having its dimensions set so that it internally fits in the first recession 8 of the end bracket having the outside diameter B. The dimension of the inside diameter of the protuberance 10g has been set so that it snugly fits in the inner peripheral surface of the first recession 8 of the end bracket. The outer peripheral surface of the proximal end portion 10a is formed into a slope surface between the outer peripheral surface of the protuberance 10g set approximately to outside diameter B and the outer peripheral surface of the engaging portions 10e set approximately to the outside diameter A such that it is small by the dimensional difference R and its diameter grows smaller toward the engaging portions 10e. The slope surface portion corresponds to a bulging portion 10h in the present invention.

To assemble the brush holder 10 into the end bracket 4, the brush holder protuberance 10g is internally fitted in the first recession 8 of the end bracket. At this time, the brush holder 10 and the end bracket 4 are aligned by spigot-engaging the inside diameter surface of the brush holder protuberance 10g with the inner peripheral surface of the first recession 8 of the end bracket. In this assembled state, the bulging portion 10h on the outer peripheral surface of the brush holder proximal portion 10a is opposed to the second recession 9. It is arranged such that a space surrounded by the bottom surface 9a of the second recession and the outer peripheral surface 9b of the second recession is formed on the outside diameter side of the bulging portion 10h, and a sealing member 13 made of a gum elastic material or the like is installed in the space.

A shallow stepped portion 8d is formed to project circumferentially at one place on the bottom surface of the first recession 8. The brush holder protuberance 10g is provided with a notch 10i that engages with the stepped portion 8d to circumferentially position or stop the brush holder 10 with respect to the end bracket 4.

The sealing member 13 placed in the space is designed to have a dimension to snugly fit in the space without being elastically deformed and it is also formed to have an approximately square section so that the installing orientation thereof is not restricted. The sealing member 13 is formed to have an axial dimension that is slightly longer than the depth H2 of the second recession 9 so that the sealing member 13 juts out of the second recession 9 when it is installed.

Incidentally, although the sealing member 13 mentioned above has a diameter dimension that is not subjected to elastic deformation, the sealing member 13 may have a diameter that is smaller than the outside diameter of the brush holder bulging portion 10h and installed in an elastically deformed state. In this case, the sealing member 13 can be set in the brush holder for temporary installation, providing an advantage in that the work for holding or supporting the sealing member 13 during the subsequent assembly can be omitted and the sealing member 13 can be prevented from haphazardly coming off.

Next, the yoke 3 is axially butted against and installed to the end bracket 4 in which the brush holder 10 has been installed. In this case, the brush holder engaging portions 10e are slidably and internally fitted (spigot-engaged) to the inner peripheral surface of the yoke 3 so as to align the end bracket 4 and the yoke 3. This allows the end bracket 4, the brush holder 10, and the yoke 3 to be assembled in alignment. In this assembled state, the protuberances 4d and 3d are abutted against each other as described above thereby to circumferentially position the end bracket 4 and the yoke 3. Securing the protuberances 4d and 3d together causes the sealing member 13 to be elastically deformed by being elastically pressed by the end surface on the inside diameter side of the yoke flange 3c so as to seal the housing 1. In the sealed state, the sealing member 13 is in elastic contact with the bulging portion 10h of the slope surface, the bottom surface 9a of the second recession, the outer peripheral surface 9b of the second recession, and the yoke flange 3c. Thus, the gap between the end bracket 4 and the yoke 3 is sealed and the elastically deformed sealing member 13 elastically presses the bulging portion 10h to apply a force in a direction (axial direction) to push the brush holder 10 against the end bracket 4, thereby securing the brush holder 10 in such a manner that it does not slip off.

One of the pigtails lla in this embodiment is connected to a connecting terminal 11b provided such that it is insulated against the end bracket 4, while the other one is directly connected to the end bracket 4 to ensure higher grounding reliability.

Incidentally, the electric motor in this embodiment is shipped out of a factory in a temporarily assembled state wherein the protuberances 4d and 3d are opposed to each other, i.e. in an unsealed state wherein the protuberances 4d and 3d have not yet been secured. As the assembly is attached to a body bracket or the like via the protuberances 4d and 3d at a site, the protuberances 4d and 3d are tightened for sealing. For this reason, the protuberances 4d and 3d that are in the temporarily installed state are temporarily fixed by joint plates 14 and 15 to ship the assembly out of a factory in the temporarily fixed state so that the assembly can be directly mounted to a body at the site. The joint plates 14 and 15 are applied from the side of the end bracket protuberance 4d and installed by crimping engaging hooks 14a and 15a at the side of the yoke protuberance 3d. At this time, the end bracket through holes 4e are formed to have larger diameters than the yoke through holes 3e. In a state wherein the hole cylinders 14b and 15b formed in the joint plates 14 and 15 are internally fitted in the end bracket through holes 4e, the end surfaces of the hole cylinders 14b and 15b are opposed to the outer peripheral surfaces of the yoke through holes 3e with a predetermined interval provided therebetween, and the inside diameters of the hole cylinders 14b and 15b are identical to or larger than the inside diameters of the yoke through holes 3e. And the joint plates 14 and 15 are installed to circumferentially position the end bracket 4 and the yoke 3 to ship the assembly out of a factory. The assembly is secured to a body bracket or the like via the hole cylinders 14b, 15b, and the yoke through holes 3e so as to seal the electric motor and to complete the installation to the body.

In the embodiment in accordance with the present invention constructed as described above, the brush holder 10 is spigot-engaged to the end bracket 4, and the spigot-engaged brush holder 10 is spigot-engaged to the yoke 3 with the sealing member 13 placed therebetween so as to assemble the housing 1 in an aligned and sealed state. In this case, the bulging portion 10h, which has the slope surface, of the brush holder 10 is elastically pressed by being axially pushed by the sealing member 13 that has been elastically deformed by the yoke flange 3c. This prevents the brush holder 10 from axially slipping off and the brush holder 10 is secured by being clamped between the end bracket 4 and the yoke 3. As a result, the sealing means of the housing 1 serves also to axially secure the brush holder 10 to the end bracket, thus obviating the need for an extra securing means for fixing the brush holder to the end bracket as in the conventional assembly.

Furthermore, the single sealing member 13 is elastically installed in the space, and it is elastically provided around the brush holder 10 while being held between the end bracket 4 and the yoke 3. As the surfaces in contact with the sealing member 13 are elastically pressed, the single sealing member 13 seals the gap between the end bracket 4 and the yoke 3 and it is also able to hold and secure the brush holder 10 to the end bracket. As a result, no securing means is required; only one sealing member 13 is required, thus permitting a reduced number of components, lower cost, and improved work efficiency.

Further, the sealing member 13 is adapted to be fitted in a space that corresponds to the second recession 9 on the outside diameter side of the brush holder proximal end portion 10a fitted in the end bracket 4; hence, the sealing member can be disposed without causing it to be elastically deformed. In addition, the fitting direction is in the direction of the armature shaft 5a, which is the same as the direction in which the yoke 3 is assembled; therefore, the work efficiency can be improved, and the extra efforts for elastically deforming the sealing member 13 to increase the diameter thereof to fit it from the outside diameter side of a component as in the conventional fitting work can be obviated.

In this embodiment, the end bracket 4 and the brush holder 10 are aligned by spigot-engaging the inner peripheral surface of the brush holder protuberance 10g with the inner peripheral surface 8a of the first recession, while the end bracket 4 and the yoke 3 are centered by spigot-engaging the engaging portion 10e with the inner peripheral surface of the yoke 3. In the spigot-engaged state, the end bracket 4, the brush holder 10, and the yoke 3 can be aligned with each other.

Further, the end bracket 4 and the yoke 3 can be also circumferentially positioned by positioning the protuberances 4d and 3d thereof.

It is obvious that the present invention is not limited to the foregoing embodiment. The recession of the end bracket need not be formed to have the step as in the embodiment; it may alternatively be of one-step recession. In this case, the outside diameter of the recession is set to be larger than the outside diameter of the brush holder proximal end portion. The bulging portion formed at the proximal end portion of the brush holder may be formed in steps having height differences in the axial direction. In the first embodiment, the brush holder 10 and the end bracket 4 are aligned by spigot-engaging the inner peripheral surface of the brush holder protuberance 10g with the inner peripheral surface 8a of the first recession 8 of the end bracket; as an alternative, however, they may be aligned by spigot-engaging the outer peripheral surface of the protuberance 10g with the outer peripheral surface 8c of the first recession 8.

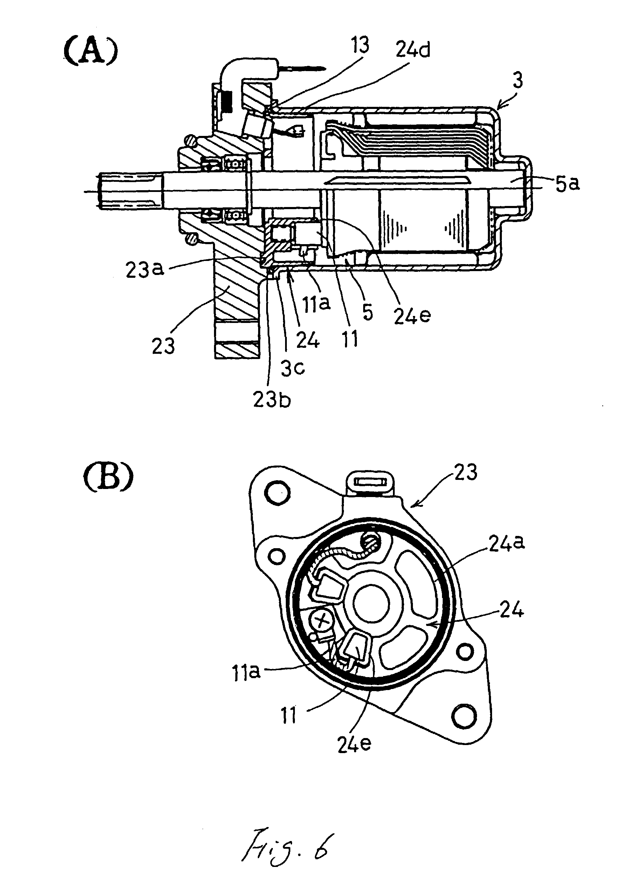

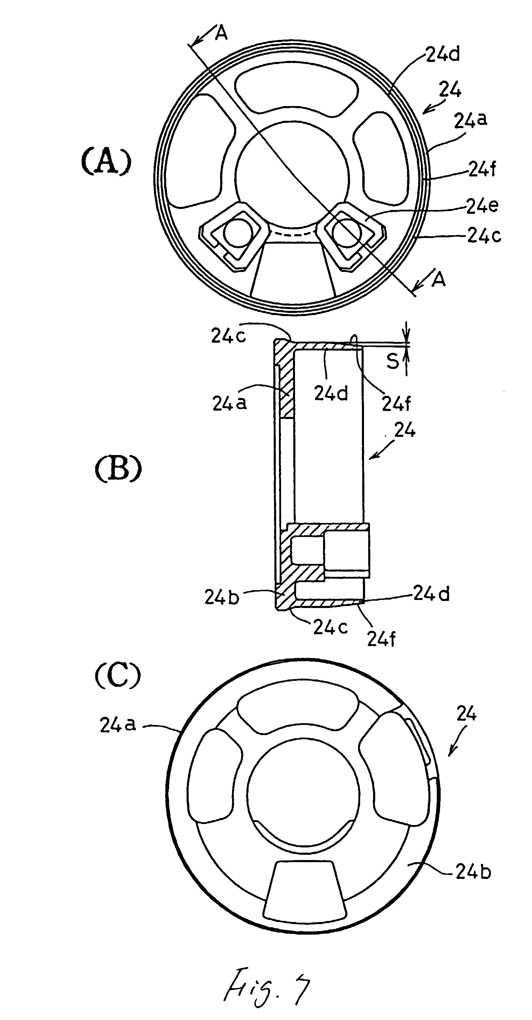

A second embodiment shown in Fig. 6 and Fig. 7 will now be described. In this embodiment, an end bracket 23 made of aluminum die-casting is employed in place of the end bracket made by press-molding a metal plate as in the first embodiment. In this case, the same configuration as that of the first embodiment is employed in that the inner surface (the other side surface) of the end bracket 23 is provided with first and second recessions 23a and 23b having different bottom depths, and a protuberance 24b is integrally formed on one side surface of the proximal end portion 24a of a brush holder 24 so as to spigot-engage the protuberance 24b with the first recession 23a. A sealing member 13 is installed in the space surrounded by a bulging portion 24c formed on the brush holder proximal end portion 24a and the second recession 23b, then a yoke flange 3c is installed so as to enable the brush holder 24 to be secured by being clamped between the end bracket 23 and a yoke 3 while sealing the gap between the end bracket 23 and the yoke 3.

Further in this embodiment, an engaging portion 24d of the brush holder 24 is formed so that it projects from the entire outer periphery of the other side surface of the proximal end portion 24a, and the outer peripheral surface of the cylindrical yoke engaging portion 24d is spigot-engaged with the inner peripheral surface of the yoke 3. The projecting length of the yoke engaging portion 24d is set approximately identical to the length of a brush housing 24e formed on the brush holder 24, and insulation is provided between a pigtail 11a extended from a brush 11 and the yoke 3 as is the case with the first embodiment.

Further, the projecting end portion of the engaging portion 24d is formed to have a tapered surface 24f so that the outer peripheral surface diameter thereof is smaller by a length S at the end thereof in order to provide an assembly guide surface for the sealing member 13. Hence, if the sealing member 13 used has a diameter that is smaller than the outside diameter of the bulging portion 24c of the brush holder, the sealing member 13 can be installed along the tapered surface 24f to allow easier assembly, thus permitting improved assemblability.

## Claims

1. Electric motor housing, characterized in that it comprises a cylindrical yoke (3), in which an armature (5) provided with a commutator (7) is placed, and an end bracket (4) covering an open end of said yoke (3), said yoke (3) being formed at its open end with a flange (3c) which abutes against an inner surface of said end bracket (4), and said end bracket (4) being formed at its inner surface with a recession (4c) in which a proximal end portion (10a) of a brush holder (10) is internally fitted to support a brush (11) which slidably contacts with said commutator (7) at the opening of the yoke (3), said brush holder (10) being provided with an engaging portion (10c) projecting from the proximal end portion (10a) thereof to fit in the inner peripheral surface of the yoke (3), the outer periphery of said proximal end portion (10a) being provided with a bulging portion (10h) having a diameter larger than the inside diameter of said yoke (3) but smaller than the inner diameter of the recession (4c) of said end bracket (4), and a space being formed which is surrounded by said bulging portion (10h), an inner peripheral surface and a bottom outside diameter side surface of said recession (4c), and said flange (3c), a sealing member (13) being elastically incorporated in said space.

2. Electric motor housing according to claim 1, characterized in that said bulging portion (10h) of the brush holder (10) is formed in a slope surface.

3. Electric motor housing according to claim 1 or 2, characterized in that said recession (4c) of the end bracket (4) comprises a deep first recession (8) in which the proximal end portion (10a) of the brush holder (10) is internally fitted and a shallow second recession (9) having a larger diameter than said first recession (8) and having an internal peripheral surface opposed to the outer peripheral surface of the bulging portion (10h).
